# EUROPEAN PATENT SPECIFICATION

(11) **EP 0 378 400 B1**
(45) Date of publication and mention of the grant of the patent: **12.06.1996**
(21) Application number: 90300294.7
(22) Date of filing: 10.01.1990
(51) Int. Cl.: H04L 29/06

(54) **Two directional data communications system**
Bidirektionales Datenkommunikationssystem
Système de communications de données bidirectionnel

(30) Priority: 13.01.1989 US 297777
(43) Date of publication of application: 18.07.1990
(73) Proprietor: International Business Machines Corporation, Armonk, N.Y. 10504 (US)
(72) Inventor: Mathis, Joseph Richard, Georgetown, TX 78628 (US); Rouse, Gerald Lavelle, Round Rock, TX 78681 (US)
(74) Representative: Burt, Roger James, Dr.

(56) References cited:
- EP-A- 0 292 691
- FR-A- 2 348 611
- US-A- 3 906 153

## Description

The present invention relates to a data communications system for transferring data in two directions between nodes in the system, and more particularly to a communications system for transferring data between computer systems.

In communications systems for transferring data between computer systems, the communications links provided by the communications system can be represented as a graph with each attached computer system and specialized server device represented as a node. Data is transferred between the nodes using an agreed protocol which is determined by the designer of the system. Typically, data is transferred using synchronous serial communications. Data and control messages are bundled into discrete packets also called frames, each of which contains addressing information, data or a control message, and error checking values.

Many communications systems are dynamically switched, so that a connection path between two nodes on the system may pass through one or more intermediate switches. Different communication sessions between the same two nodes may be routed through different physical connection paths.

Because of various delays and competition for resources inherent in communications systems, various conflicts can arise. These conflicts involve the timing of data accesses to remote nodes, and can be important when certain shared resources, such as network file servers, are accessed.

Two-way transfer of data between nodes is generally accomplished as two separate transactions. When a local node requires to transfer information to a remote node, a communications link is set up for that transfer. Once the transfer is complete, the communications link is disconnected. If the remote node needs to transfer a reply, a new communications link is initiated and the transfer of the reply to the local node is made over the new link.

In EP-A-0292691 and US-A-3906153, half duplex communication between modems or stations of a communications network is shown. In half duplex communication, transmission in opposite directions takes place alternately over the same connections. It is known for the transmitting device to signal the receiving device at the end of a transmission to initiate a turn round in data transmission direction.

In some situations, it is necessary for a local node to be able to transmit data to and receive data from a remote node in a single transaction. This prevents interference from third party nodes during the time between closing of a transmission link in one direction and initiating a new link n the other direction. This situation is similar to certain bus conflicts found in computer systems, in which certain "atomic operations" must not be interrupted by other devices attached to the computer system bus. The operation "test-and-set" on multiprocessing systems typifies this type of atomic operation.

The object of the present invention is to provide an improved data communications system in which a single communications link can be used for data transfer in both directions, a so called "atomic link" operation.

The present invention provides a two-directional communications system comprising a first device for transmitting and receiving data, a second device for transmitting and receiving data, a communications network coupled to the first and second devices for transferring data therebetween, and means for signalling a turn around in transmission direction between the devices; characterised in that
the system further comprises means for establishing a communications session between the first and the second devices for transmission of data from the first device to the second device and vice versa over a communications link in the network;
the first device comprising means for requesting data transmission from the second device during the same communication session and over the same link;
the second device comprising means responsive selectively to said request for transmission of data either to transmit said transmission direction turn around signal to the first device and subsequently transmit data thereto over the same link and during the same session or to deny said request and disconnect the link thereby terminating the communications session.

According to a second aspect, the invention also provides a method for communicating data between a first device and second device (14) over a communications network, comprising the steps of:-
transmitting data from the first device to the second device (14) over the communications network;
signalling a turn around in transmission direction;
subsequent to signalling the turn around, transmitting data from the second device to the first device over the communications network;
characterised by
establishing a communications session between the first and the second device for the transmission of data from the first device to the second device over a communications link in the network;
the first device requesting data transmission from the second device during the same communication session and over the same link;
the second device, in response to said request for transmission of data selectively either transmitting said transmission direction turn around signal to the first device and subsequently transmitting data thereto over the same link and during the same session or denying said request and disconnecting the link thereby terminating the communications session.

In order that the invention may be more readily understood an embodiment will now be described with reference to the accompanying drawings, in which:
FIG. 1 is a block diagram of a communications system,
FIG. 2 is a flowchart illustrating the operation of a data transfer direction turnaround on a communications link between nodes in the system illustrated in Fig. 1, and
FIG. 3 is a diagram illustrating the timing and control signals of a communication session between the two nodes, referred to in Fig. 2.

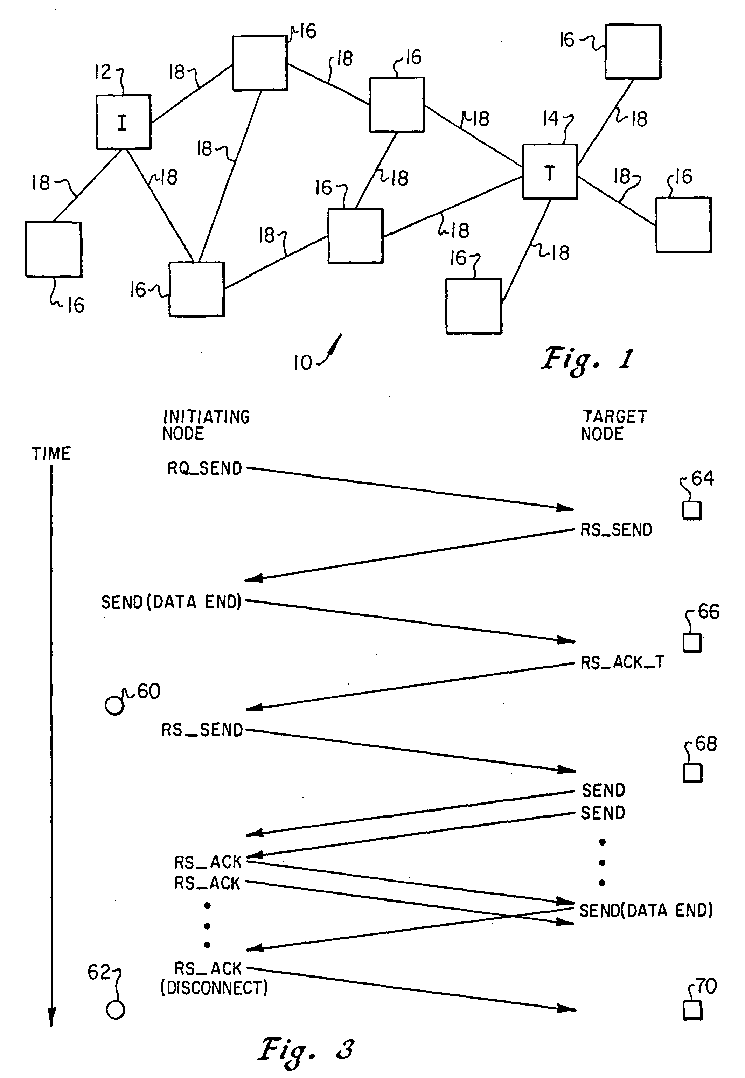

Referring to Figure 1, a data communications network or system 10 contains a plurality of nodes. An initiating node 12 initiates a communications session with a target node 14 as described below. The remaining intermediate nodes 16 form the rest of the network 10.

Each of the nodes 12, 14, 16 may be a computer system, a terminal, a printer, a file server, or any other type of device which may be connected together to form a network. A node 16 may also represent a gateway to another network.

The nodes are interconnected by wired connections 18. The network shown in Figure 1 is not intended to be representative of any particular network arrangement. The arrangement to be described is equally applicable to star, token-ring, packet switched, and other network topologies. The network 10 is preferably dynamically switched, so that two different communication sessions for transferring data between nodes 12 and 14 may use different sets of connections 18 and intermediate nodes 16.

In the description which follows, initiating node 12 will also be referred to as node I. Target node 14 will also be referred to as node T.

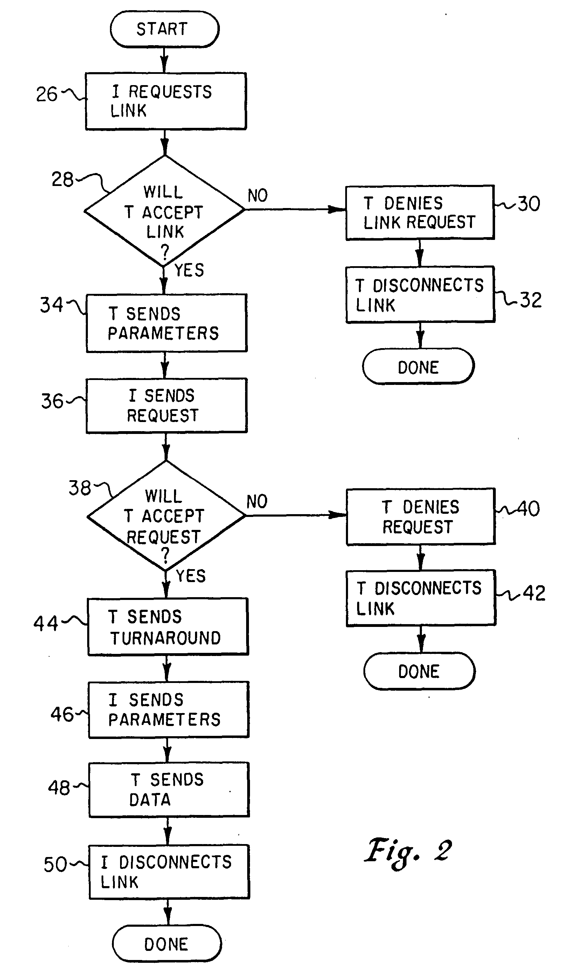

The communication protocol described in connection with Figures 2 and 3 is described in detail in copending European Patent Application, publication No. 0378401, which is incorporated by reference herein. The protocol described in the copending application is utilized herein as a preferred embodiment, but is not required to practice the present invention.

In the communications protocol to be described, a communications link is established by a sending device which wishes to transfer data to a receiving device. The sending device initiates the transfer by sending a control message to the receiving device, which responds by returning a control message containing parameters defining the environment of the receiving device. This environment can include information such as the number of receive buffers available in the receiving device, and their size.

Once the sending device has received these environment parameters, it sends data in blocks which can be accommodated in the receiver's buffers. As the receiver removes each block of data from a buffer, it transmits an acknowledge message to the sender. By keeping track of the acknowledge messages, the sender can control the data transfer and detect certain types of transfer errors. The details of such communications protocol are described further in the above referenced copending application.

Referring to Figure 2, a flowchart illustrating data transfer by an "atomic link" operation between the initiating node 12 and the target node 14 is shown. Node I requests the atomic link operation, and node T permits it and performs the data transmission direction turnaround. At step 26 node I initiates a communication with node T by requesting a communications link. This is accomplished by sending a control message to node T requesting communication. At step 28 node T determines whether it will accept a link request. If not, at step 30 node T denies the request and at step 32 disconnects the link. If node T will accept the request, at step 34 node T sends parameters which describe its operating environment. These parameters preferably include the number of available buffers in node T, and their size.

Once it has received the parameters, at step 36 node I sends its request to node T. This request is sent as data which is transferred to the target node T in the normal manner for data transfers. The request asks the target node T to perform an atomic link operation consisting of changing the direction of data communication between the initiating and target nodes without terminating the communication link and establishing a new link when the transfer of data from node I to node T has been completed..

At step 38, the target node T decides whether it will accept the atomic link operation request. This decision can be based on a number of factors, such as whether the target node T is capable of supporting such a request at the current time, and whether the initiating node I has the authority to request such an operation. If, for whatever reason, the target node T does not accept the request, at step 40 it sends a control message to node I denying the request and at step 42 it disconnects the communications link.

If the target node T will accept the request, at step 44 it transmits a turnaround message to the initiating node I. The turnaround message provides several functions. It acts as an acknowledgement of receipt of the last data block sent by the initiating node I. It also indicates that the request for an atomic link operation was granted, implying that data transfer will now change direction, and acts as a request to transfer data to the initiating node I.

In response to the turnaround message, at step 46 the initiating node I transmits its receiving parameters to the target node T. These parameters preferably include the number of available buffers in node I, and the buffer size. At step 48 the target node T then sends data to the initiating node I. The final block of data contains a flag which indicates that it is the final data block of this transfer. When the initiating node I acknowledges the final block of data, at step 50 it disconnects the communication link and the atomic link operation is complete.

Figure 3 shows the timing and preferred data and control messages used in a data transfer operation such as described in connection with Figure 2. The message RQ_SEND is a control message requesting permission to transmit information. RS_SEND is a control message granting permission to transfer data, and providing the environment parameters described above. The message SEND is a block of data, also referred to as a data frame, being transferred. The signal RS_ACK is an acknowledgement message indicating that a data frame has been received and emptied from the receive buffer.

RS_ACK_T is the turnaround message described in connection with Figure 2. The SEND(data end) message is a data frame which includes a flag indicating that this is the final data frame of a transfer operation. The RS_ACK(disconnect) message is an acknowledgement signal sent in response to receipt of a SEND(data end) data frame message, and acts to disconnect the communications link between the initiating node I and the target node T.

The circles 60 and 62 indicate interrupts in the operation of the initiating node I, and the squares 64, 66, 68, and 70 indicate interrupts in the operation of the target node T. These interrupts 60 through 70 indicate times at which it may be necessary for the processor controlling the corresponding node to perform a software routine prior to continuing the communication process. This routine typically makes decisions about the process, including deciding whether to continue.

The initiating node I begins the data transfer by sending an RQ_SEND message to the target node T. This establishes the communications link and requests permission to transfer data to the target node T. Interrupt 64 is raised at the target node T to allow its processor to determine whether to accept a communication. If the target node T does not grant such permission, it sends a reply message RS_NAK (not shown). If the target node T grants permission to send data, it indicates this fact and defines its environment using an RS_SEND message. The initiating node I then begins sending data with a series of SEND messages. In Figure 3, the sending of only a single SEND frame message is shown, but any number of data frames may actually be transmitted by the initiating node I at this time. If more than one SEND frame is sent to the target node T, the initiating node I expects to receive an RS_ACK message for each frame sent, except for the last one. The last frame sent contains a flag indicating that it is the last data frame.

Included in the last frame of data sent from the initiating node I to the target node T is a request to perform an atomic link operation. When the SEND(data end) message is received by the target node T, interrupt 66 causes the processor associated with the target node T to analyze the request for an atomic link operation included in the data frame sent. If the target node T does not accept the request, a control message RS_NAK (not shown) is returned to the initiating node I, indicating that the request is not acknowledged. The RS_NAK message also causes the communications link to be disconnected. In the example shown in Figure 3, the request is acknowledged, and the control message RS_ACK_T is sent to the initiating node I. This message causes an interrupt 60 in the operation of the initiating node, which signals that the previous SEND sequence was successful and the request for an atomic link operation is granted, and allows the initiating node I to undertake whatever processing is necessary prior to receiving data.

As described above, one of the functions of the RS_ACK_T message is to initiate a data transfer from the target node T to the initiating node I. After the interrupt 60, the initiating node I sends an RS_SEND message, which defines its operating environment and gives the target node T permission to begin sending data. Interrupt 68 is used by the target node T to process this grant of permission, after which the target node T begins sending data in SEND frames.

The initiating node I responds to the receipt of each SEND frame message with an RS_ACK message, which is used to verify correct data transfer as described above. The last data block is sent with a SEND(data end) message, which is acknowledged by an RS_ACK(disconnect) message. The disconnect signal raises interrupts 62, 70 to both nodes I, T to indicate that data transfer is complete.

In reply to the SEND(data end) message sent by the target node T, it is possible for the initiating node I to reply with an RS_ACK_T message instead of an RS_ACK(disconnect) message. This message would request another reversal of direction of data transfer, allowing the initiating node I to send further data to the target node T. The process of sending consecutive blocks of data, followed by an RS_ACK_T message, may be repeated as often as desired. This would allow a large number of data transfer direction reversals to be made without disconnecting the current communications link and establishing a new one. However, in most cases it will not be necessary to perform more than a single turnaround. In addition, an extended operation in which the communications link is locked may have undesired effects upon operation of the remainder of the network.

As will be appreciated by those skilled in the art, the arrangement described above provides for an operation on a data communication network which locks a communications link for bidirectional data transfer. A special control command is used to turn the data transfer direction around. Such an operation can be used when it is necessary to transfer data in both directions between two nodes on a network without the possibility of an intervention by a third node. This operation is similar to a test-and-set command used in a multiprocessing computer system, except that it operates over a distributed network. In a communications system which requires each data packet to be separately acknowledged, a modified acknowledge message can be used to signal the data direction turnaround.

## Claims

1. A two-directional communications system comprising a first device (12) for transmitting and receiving data, a second device (14) for transmitting and receiving data, a communications network (16, 18) coupled to the first and second devices for transferring data therebetween, and means (44) for signalling a turn around in transmission direction between the devices; characterised in that
the system further comprises means (26, 28, 34) for establishing a communications session between the first and the second devices for transmission of data from the first device to the second device and vice versa over a communications link in the network;
the first device comprising means (36) for requesting data transmission from the second device during the same communication session and over the same link;
the second device comprising means (38, 40, 42, 44, 48) responsive selectively to said request for transmission of data either to transmit said transmission direction turn around signal to the first device and subsequently transmit data thereto over the same link and during the same session or to deny said request and disconnect the link thereby terminating the communications session.

2. A system as claimed in claim 1 in which the means for establishing a communications session comprise means (26) in the first device for requesting the session and means (28) in the second device for selectively accepting or denying the session.

3. A system as claimed in claim 2 in which the means (36) in the first device for requesting data from the second device is responsive to an indication of acceptance of the session from the means (28) in the second device for selectively accepting or denying the session.

4. A system as claimed in any preceding claim in which the first device includes means (46) for transmitting operating environment parameters to the second device in response to receipt of said transmission turn around signal.

5. A method for communicating data between a first device (12) and second device (14) over a communications network (16, 18), comprising the steps of:-
transmitting data (36, 46) from the first device (12) to the second device (14) over the communications network;
signalling (44) a turn around in transmission direction;
subsequent to signalling the turn around, transmitting data (48) from the second device to the first device over the communications network;
characterised by
establishing (26, 28, 34) a communications session between the first and the second device for the transmission of data from the first device to the second device over a communications link in the network;
the first device requesting (36) data transmission from the second device during the same communication session and over the same link;
the second device, in response to said request for transmission of data selectively (38) either transmitting (44) said transmission direction turn around signal to the first device and subsequently transmitting (48) data thereto over the same link and during the same session or denying (40) said request and disconnecting (42) the link thereby terminating the communications session.

6. A method as claimed in claim 5 in which the step of establishing a communications session comprises the first device requesting the session (26) and the second device selectively (28) accepting or denying the session.

7. A method as claimed in claim 6 in which the second device indicates acceptance of the session by transmitting (34) operating environment parameters to the first device.

8. A method as claimed in claim 6 or claim 7 in which the step (36) of the first device requesting data from the second device occurs in response to acceptance of the session.

9. A method as claimed in any one of claims 5 to 8 in which, in response to said transmission direction turn around signal, the first device transmits (46) operating environment parameters to the second device which then transmits (48) data to the first device.

10. A method as claimed in anyone of claims 5 to 9 in which the request (36) from the first device for data from the second device occurs at the end of any transmission of data from the first device to the second device.

## Patentansprüche

1. Ein bidirektionales Kommunikationssystem, das ein erstes Gerät (12) zur Übertragung und für den Empfang von Daten, ein zweites Gerät (14) zur Übertragung und für den Empfang von Daten, ein Kommunikationsnetzwerk (16, 18), das an das erste und das zweite Gerät gekoppelt ist und zur Übertragung von Daten zwischen den Geräten dient, und ein Mittel (44) zur Aufforderung zur Umkehr der Übertragungsrichtung zwischen den Geräten umfaßt; dadurch charakterisiert, daß
das System weiterhin ein Mittel (26, 28, 34) zur Herstellung einer Kommunikationssitzung zwischen dem ersten und dem zweiten Gerät für eine Übertragung von Daten von einem ersten Gerät zu einem zweiten Gerät und umgekehrt über eine Kommunikationsverbindung im Netzwerk umfaßt;
wobei das erste Gerät ein Mittel (36) zur Anforderung einer Datenübertragung vom zweiten Gerät während derselben Kommunikationssitzung und über dieselbe Verbindung umfaßt;
wobei das zweite Gerät ein Mittel (38, 40, 42, 44, 48) umfaßt, das selektiv auf die genannte Anforderung von Daten reagiert, entweder um das genannte Übertragungsrichtungsumkehrsignal an das erste Gerät zu übertragen und um danach Daten über dieselbe Verbindung und während derselben Sitzung dorthin zu übertragen, oder um die genannte Anforderung zurückzuweisen und die Verbindung aufzulösen, wodurch die Kommunikationssitzung beendet wird.

2. Ein System gemäß Anspruch 1, in dem das Mittel zur Herstellung einer Kommunikationssitzung ein Mittel (26) im ersten Gerät zur Anforderung der Sitzung und ein Mittel (28) im zweiten Gerät zur wahlweisen Annahme oder Zurückweisung der Sitzung umfaßt.

3. Ein System gemäß Anspruch 2, in dem das Mittel (36) im ersten Gerät zur Anforderung von Daten vom zweiten Gerät auf eine Anzeige der Annahme der Sitzung vom Mittel (28) im zweiten Gerät zur wahlweisen Annahme oder Zurückweisung der Sitzung reagiert.

4. Ein System gemäß allen vorherigen Ansprüchen, in dem das erste Gerät ein Mittel (46) zur Übertragung von Betriebsumgebungsparametern an das zweite Gerät als Reaktion auf den Empfang des genannten Übertragungsumkehrsignals umfaßt.

5. Ein Verfahren zur Kommunikation zwischen einem ersten Gerät (12) und einem zweiten Gerät (14) über ein Kommunikationsnetzwerk (16, 18), das folgende Schritte umfaßt:
die Übertragung von Daten (36, 46) vom ersten Gerät (12) zum zweiten Gerät (14) über das Kommunikationsnetzwerk;
die Signalisierung (44) einer Übertragungsrichtungsumkehr;
nach der Signalisierung dieser Umkehr die Übertragung von Daten (48) über das Kommunikationsnetzwerk vom zweiten Gerät zum ersten Gerät;
charakterisiert durch
die Herstellung (26, 28, 34) einer Kommunikationssitzung zwischen dem ersten und dem zweiten Gerät für die Übertragung von Daten vom ersten Gerät zum zweiten Gerät über eine Kommunikationsverbindung im Netzwerk;
die Tatsache, daß das erste Gerät (36) während derselben Kommunikationssitzung und auf derselben Verbindung die Datenübertragung vom zweiten Gerät anfordert;
wobei das zweite Gerät bei der genannten Anforderung der Übertragung von Daten wahlweise (38) entweder das genannte Übertragungsrichtungsumkehrsignal an das erste Gerät überträgt (44) und danach Daten über dieselbe Verbindung und während derselben Sitzung dorthin überträgt (48), oder die genannte Anforderung zurückweist (40) und die Verbindung auflöst (42), wodurch die Kommunikationssitzung beendet wird.

6. Ein Verfahren gemäß Anspruch 5, in dem der Schritt der Herstellung einer Kommunikationssitzung darin besteht, daß das erste Gerät die Sitzung (26) anfordert und das zweite Gerät wahlweise (28) die Sitzung akzeptiert oder zurückweist.

7. Ein Verfahren gemäß Anspruch 6, in dem das zweite Gerät durch die Übertragung (34) der Betriebsumgebungsparameter zum ersten Gerät die Annahme der Sitzung anzeigt.

8. Ein Verfahren gemäß Anspruch 6 oder 7, in dem der Schritt (36) des ersten Geräts, bei dem Daten vom zweiten Gerät angefordert werden, nach Annahme der Sitzung erfolgt.

9. Ein Verfahren gemäß jedem der Ansprüche 5 bis 8, in dem als Reaktion auf das genannte Übertragungsrichtungsumkehrsignal das erste Gerät Betriebsumgebungsparameter an das zweite Gerät überträgt (46), das daraufhin Daten zum ersten Gerät überträgt (48).

10. Ein Verfahren gemäß jedem der Ansprüche 5 bis 9, in dem die Datenanforderung (36) vom ersten Gerät vom zweiten Gerät am Ende jeder Übertragung von Daten vom ersten Gerät zum zweiten Gerät erfolgt.

## Revendications

1. Un système de communications bidirectionnelles comprenant un premier dispositif (12) destiné à transmettre et à recevoir des données, un deuxième dispositif (14) destiné à transmettre et à recevoir des données, un réseau de communication (16, 18) couplé aux premier et deuxième dispositifs pour transférer entre eux des données, et un moyen (44) destiné à signaler un retournement dans la direction de transmission entre les dispositifs; caractérisé en ce que
le système comprend en outre des moyens (26, 28, 34) destinés à établir une session de communication entre les premier et deuxième dispositifs pour la transmission de données du premier dispositif au deuxième dispositif et vice-versa sur une liaison de communication dans le réseau;
le premier dispositif comprenant un moyen (36) destiné à effectuer la requête de transmission de données depuis le deuxième dispositif pendant la même session de communication et sur la même liaison;
le deuxième dispositif des moyens (38, 40, 42, 44, 48) réagissant sélectivement à ladite requête de transmission, soit pour transmettre ledit signal de retournement de direction de transmission au premier dispositif et ensuite de lui transmettre des données, sur la même liaison et pendant la même session, ou bien de refuser ladite requête et de déconnecter la liaison de manière à achever la session de communication.

2. Un système selon la revendication 1, dans lequel le moyen d'établissement d'une session de communication comprend un moyen (26) dans le premier dispositif, pour établir la requête de la session, et un moyen (28) dans le deuxième dispositif, afin sélectivement d'accepter ou de refuser la session.

3. Un système selon la revendication 2, dans lequel le moyen (36), situé dans le premier dispositif pour établir la requête de données à partir du deuxième dispositif, réagit à une indication d'acceptation de la session par le moyen (28) situé dans le deuxième dispositif, afin sélectivement d'accepter ou de refuser la session.

4. Un système selon l'une quelconque des revendications précédentes, dans lequel le premier dispositif comprend un moyen (46) destiné à transmettre des paramètres d'environnement fonctionnels au deuxième dispositif en réponse à la réception dudit signal de retournement de transmission.

5. Un procédé de communication de données entre un premier dispositif (12) et un deuxième dispositif (14) sur un réseau de communication (16, 18), comprenant les étapes consistant à :
- transmettre des données (36, 46) depuis le premier dispositif (12) au deuxième dispositif (14) sur le réseau de communication;
- signaler (44) un retournement du sens de transmission;
- suite à la signalisation du retournement, transmettre des données (48) depuis le deuxième dispositif au premier dispositif sur le réseau de communication;
caractérisé par
- l'établissement (26, 28, 34) d'une session de communication entre le premier et deuxième dispositifs pour la transmission de données du premier dispositif au deuxième dispositif sur une liaison de communication dans le réseau;
- le premier dispositif établissant la requête (36) de transmission de données par le deuxième dispositif durant la même session de communication et sur la même liaison;
- le deuxième dispositif, en réponse à ladite requête de transmission de données, opérant de façon sélective (38) soit la transmission (44) dudit signal de retournement de sens de transmission au premier dispositif, puis lui transmettant (48) des données, sur la même ligne de liaison et pendant la même session, ou refusant (40) ladite requête et déconnectant (42) la liaison de manière à achever la liaison la session de communication.

6. Un procédé selon la revendication 5, dans lequel l'étape d'établissement d'une session de communication comprend la requête par le premier dispositif de la session (26) et l'acceptation ou le refus sélectif (28) de la session par le deuxième dispositif.

7. Un procédé selon la revendication 6, dans lequel le deuxième dispositif indique l'acceptation de la session par transmission (34) de paramètres d'environnement fonctionnels au premier dispositif.

8. Un procédé selon la revendication 6 ou la revendication 7, dans lequel l'étape (36) de requête de données depuis le deuxième dispositif par le premier dispositif se produit en réponse à l'acceptation de la session.

9. Un procédé selon l'une quelconque des revendications 5 à 8, dans lequel en réponse audit signal de retournement de la direction de transmission, le premier dispositif transmet (46) des paramètres d'environnement fonctionnels au deuxième dispositif qui, ensuite, transmet (48) des données au premier dispositif.

10. Un procédé selon l'une quelconque des revendications 5 à 9, dans lequel la requête (36) venant du premier dispositif pour des données venant du deuxième dispositif se produit à la fin d'une transmission quelconque de données depuis le premier dispositif au deuxième dispositif.
